# EUROPEAN PATENT SPECIFICATION

(11) **EP 4 080 158 B1**
(45) Date of publication and mention of the grant of the patent: **16.09.2026**
(21) Application number: 20900786.3
(22) Date of filing: 08.12.2020
(51) Int. Cl.: G01B 7/02, G01B 7/16, G01B 11/16, G06N 3/044, G06N 3/084

(54) **ESTIMATION DEVICE, ESTIMATION METHOD, PROGRAM AND LEARNED MODEL GENERATION DEVICE**
SCHÄTZVORRICHTUNG, SCHÄTZVERFAHREN, PROGRAMM UND VORRICHTUNG ZUR GENERIERUNG EINES GELERNTEN MODELLS
DISPOSITIF D'ESTIMATION, PROCÉDÉ D'ESTIMATION, PROGRAMME ET DISPOSITIF DE GÉNÉRATION DE MODÈLE APPRIS

(30) Priority: 19.12.2019 JP 2019229782
(43) Date of publication of application: 26.10.2022
(73) Proprietor: BRIDGESTONE CORPORATION, Chuo-ku Tokyo 104-8340 (JP); The University of Tokyo, Bunkyo-ku, Tokyo 113-8654 (JP)
(72) Inventor: SAKURAI, Ryo, Tokyo 104-8340 (JP); WAKAO, Yasumichi, Tokyo 104-8340 (JP); NAKAJIMA, Kohei, Tokyo 113-8654 (JP)
(74) Representative: Marks & Clerk LLP
(86) International application number: PCT/JP2020/045735
(87) International publication number: WO 2021/124992

(56) References cited:
- JP-A- 2013 190 427
- JP-A- 2019 507 411
- JP-A- 2019 507 411
- JP-A- S4 824 175
- US-A1- 2017 284 903
- NAKAJIMA KOHEI ET AL: "Exploiting the Dynamics of Soft Materials for Machine Learning", SOFT ROBOTICS, vol. 5, no. 3, 1 June 2018 (2018-06-01), pages 339 - 347, XP055835938, ISSN: 2169-5172, DOI: 10.1089/soro.2017.0075
- MIGUEL A.S. MATOS: "Application of machine learning to predict the multiaxial strain-sensing response of CNT-polymer composites", CARBON, vol. 146, 1 May 2019 (2019-05-01), GB, pages 265 - 275, XP093164232, ISSN: 0008-6223, [retrieved on 20240517], DOI: 10.1016/j.carbon.2019.02.001
- NAKAJIMA KOHEI, HAUSER HELMUT, LI TAO, PFEIFER ROLF: "Exploiting the Dynamics of Soft Materials for Machine Learning", SOFT ROBOTICS, vol. 5, no. 3, 1 June 2018 (2018-06-01), pages 339 - 347, XP055835938, ISSN: 2169-5172, DOI: 10.1089/soro.2017.0075
- NAKAJIMA, KOHEI; INOUE, KATSUMA; KUNIYOSHI, YASUO; SOMLOR, SOPHON; TOMO, TITO PRADHONO; SCHMITZ, ALEXANDER: "Exploiting the Deformation Dynamics of Soft Materials as an Information Processing Device", JOURNAL OF THE INSTITUTE OF ELECTRONICS, vol. 102, no. 2, 1 February 2019 (2019-02-01), JP , pages 121 - 126, XP009537488, ISSN: 0913-5693

## Description

### Technical Field

The present disclosure relates to an estimation device, an estimation method, a program, and a learned (trained) model generation device.

### Background Art

Elastic bodies such as spring members, rubber members and the like can extend and can contract due to forces applied thereto, and there has conventionally been the need to understand the behaviors of members including elastic bodies in cases of carrying out control of members including elastic bodies. In order to grasp the behavior of members including elastic bodies, for example, the length of a member is measured by a distance sensor or the like (see, for example, Japanese Patent Application Laid-Open (JP-A) No. 2013-1052). US-A-2017/284903 discloses the monitoring of machine health using multiple sensors. For example, a computing device can determine a target sensor to monitor from among multiple sensors associated with the machine. The computing device can determine magnitude values for a particular component of a time series associated with the target sensor. The computing device can generate a dataset including the magnitude values for the particular component of the time series and the sensor measurements from the multiple sensors. The computing device can generate a model using the dataset. The computing device can then receive additional sensor-measurements from the multiple sensors and use the model to determine a predicted magnitude-value for the particular component of the time series based on the additional sensor-measurements.
JP-A-2019507411 discloses that target characteristic data can be predicted using a device that includes a processor and one or more computer-readable media that collectively include instructions. When executed by a processor, the instructions include: obtaining, by the processor, a plurality of physical structure data and a plurality of characteristic data; estimating at least one structural similarity between at least two physical structures corresponding to physical structure data in the plurality of physical structure data; estimating, from the target physical structure data, the at least one characteristic data and the corresponding at least one corresponding structure similarity between the target physical structure data and each of the plurality of physical structure data.
JP-A-S4824175 discloses a method and apparatus for identifying a deformation/transformation of a structure using the distortion data and the heuristic model which were measured more specifically.
"Exploiting the Dynamics of Soft Materials for Machine Learning" by NAKAJIMA KOHEI et al. discloses using a soft silicone arm through a technique of multiplexing, which enables the rich transient dynamics of the soft materials to be fully exploited as a computational resource. The computational performance of the soft silicone arm is examined through two standard benchmark tasks.

The article "Application of machine learning to predict the multiaxial strain-sensing response of CNT-polymer composites", MIGUEL A.S. MATOS, CARBON, vol. 146, 1 May 2019 (2019-05-01), pages 265-275, discloses an estimation device and a corresponding computer implemented method relying on a trained model for modelling the behaviour of a piezo-resistive composite made of carbon nanotubes embedded in a polymer matrix.

### SUMMARY OF INVENTION

### Technical Problem

Elastic bodies exhibit linear behaviors and exhibit non-linear behaviors. For example, there are cases in which a flexible elastic body such a rubber member or the like exhibits a non-linear behavior with respect to an applied force. For example, in a case in which, after force is applied to an elastic body, the force is gradually cancelled and the elastic body returns to its original state, the deformation of the elastic body, e.g., the fluctuation in the length thereof, is non-linear. Therefore, sensing of the shape by a sensor is a precondition for grasping the deformation of a member that deforms non-linearly. However, in a case of controlling the behavior of a member, grasping of the behavior of the member and making the device compact by carrying out sensing by fewer sensors are required. However, a sensor system for grasping deformation of a member that deforms non-linearly is a large-scale system and leads to increased size of the device, and therefore is not preferable. Further, in a case of detecting deformation by directly equipping a member that deforms non-linearly with a sensor, there are cases in which the dedicated sensor that the member is equipped with affects the behavior of the member, and there is room for improvement in grasping the behavior of a member by using a dedicated sensor.

The present disclosure provides an estimating device, an estimating method, a program, and a learned model generating device that can estimate deformation of a member without directly measuring the deformation.

### Solution to Problem

The invention is set out in the appended set of claims.

### Advantageous Effects

In accordance with the present disclosure, there is the effect that deformation of a member can be estimated without directly measuring the deformation.

### BRIEF DESCRIPTION OF DRAWINGS

Fig. 1 is a block drawing illustrating functional structures of an embodiment of a physical amount estimating device of an elastic body.
Fig. 2 is an explanatory drawing of a member that deforms non-linearly.
Fig. 3 is an explanatory drawing of learning processing by which a learned model relating to a first embodiment is learned.
Fig. 4 is a block drawing illustrating an example of a measuring device relating to the first embodiment.
Fig. 5 is a flowchart illustrating an example of learning data collecting processing relating to the first embodiment.
Fig. 6 is an explanatory drawing of learning processing at a learning processing section relating to the first embodiment.
Fig. 7 is a flowchart illustrating an example of the flow of learning processing relating to the first embodiment.
Fig. 8 is a block drawing illustrating an example of a case in which a device, which realizes various functions of the physical amount estimating device of an elastic body relating to the first embodiment, is structured to include a computer.
Fig. 9 is a flowchart illustrating an example of the flow of estimating processing relating to the first embodiment.
Fig. 10 is an explanatory drawing of learning processing at a learning processing section relating to a second embodiment.
Fig. 11 is a flowchart illustrating an example of the flow of learning processing relating to the second embodiment.
Fig. 12 is an explanatory drawing of learning processing at a learning processing section relating to a third embodiment.
Fig. 13 is a flowchart illustrating an example of the flow of learning processing relating to the third embodiment.
Fig. 14 is a graph illustrating characteristics of actually measured values and estimated values of the length of a rubber actuator in a case in which pressure is applied randomly to the rubber actuator.

### DESCRIPTION OF EMBODIMENTS

Embodiments that realize the technique of the present disclosure are described in detail hereinafter with reference to the drawings.

Note that structural elements and processings whose operations and functions have the same actions are denoted by the same reference numerals throughout all of the drawings, and there are cases in which repeat description is omitted as appropriate. Further, the present disclosure is not in any way limited to the following embodiments, and can be implemented by appropriate changes being made thereto within the scope of the object of the present disclosure.

The "member" in the present disclosure is a concept that includes materials that deform non-linearly and whose electrical characteristic varies in accordance with the deformation. The "elastic body" is an example of the member, and is a concept that includes flexible materials such as rubber, foamed materials, resin materials and the like. Further, "elastic contracting body" is an example of the elastic body, and is a concept that includes members that generate contracting force in a predetermined direction from the physical amount that is applied. The predetermined direction in which the contracting force is generated may be a rectilinear direction expressing extension/contraction that is expressed in two dimensions, or may be a curved direction expressing flexure that is expressed in three dimensions. Further, the elastic contracting body includes a member whose interior is formed to be hollow, and in which a pressurized fluid is supplied into this hollow interior, and that generates contracting force in a predetermined direction. Note that the physical amount that deforms the member whose electrical characteristic varies in accordance with the deformation is the first physical amount and is a pressure. Further, the physical amount that expresses the electrical characteristic that varies in accordance with the deformation of the member is the second physical amount, and an electrical resistance value is an example thereof. Moreover, the physical amount that expresses the amount of deformation of the member is the third physical amount, and distance, flexure and strain are examples thereof.

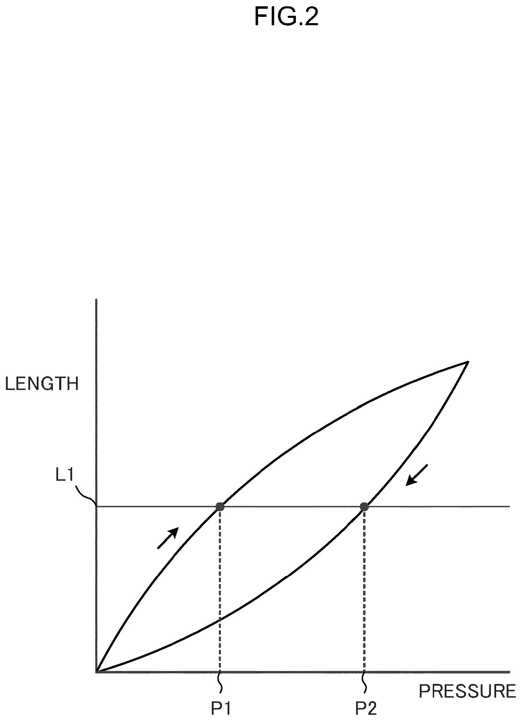

By the way, a flexible elastic body such as a rubber member or the like exhibits non-linear behavior with respect to applied force. For example, when looking at two-dimensional shape changes from the standpoint of changes in shape, the distance of extending/contracting in a given direction (e.g., a rectilinear direction) varies non-linearly in accordance with the applied force (i.e., the physical amount or energy) (see Fig. 2). For example, as illustrated in Fig. 2, at an elastic body whose length varies in accordance with the magnitude of the pressure applied thereto, the change characteristic of the length differs depending on whether the pressure is in the increasing direction or the decreasing direction. In the example illustrated in Fig. 2, there is the same length L1 at pressures P1 and P2. Accordingly, it is difficult to identify the magnitude (e.g., the length) of the deformation from the magnitude (e.g., the pressure value) of the pressure. Here, the estimating device of the present disclosure is described by using, as an example, a case in which the estimating device has the function of estimating, from at least two physical amounts, another physical amount for a member that deforms non-linearly, by using a learned model that is learned in advance.

Namely, the estimating device of the present disclosure includes a learned model that is learned so as to output a target physical amount with respect to inputs that are a first physical amount and a second physical amount by using plural data for learning in which are associated with one another the first physical amount, a pressure value expressing the magnitude of pressure, that deforms a member that deforms non-linearly and whose electrical characteristic varies in accordance with the deformation, the second physical amount (e.g., an electrical resistance value expressing the magnitude of the electrical characteristic) that expresses the electrical characteristic that varies in accordance with the deformation of the member, and a target physical amount (e.g., distance or length expressing the magnitude of the deformation) that expresses the amount of deformation of the member, and the learned model outputs a target physical amount with respect to input of a first physical amount and a second physical amount of an object of estimation. Further, time-series information is associated with at least one of the physical amounts in the data for learning. Further, by using this learned model, the estimating device uses a first physical amount and a second physical amount of an object of estimation as inputs, and estimates the output of the learned model as the target physical amount.

### (First Embodiment)

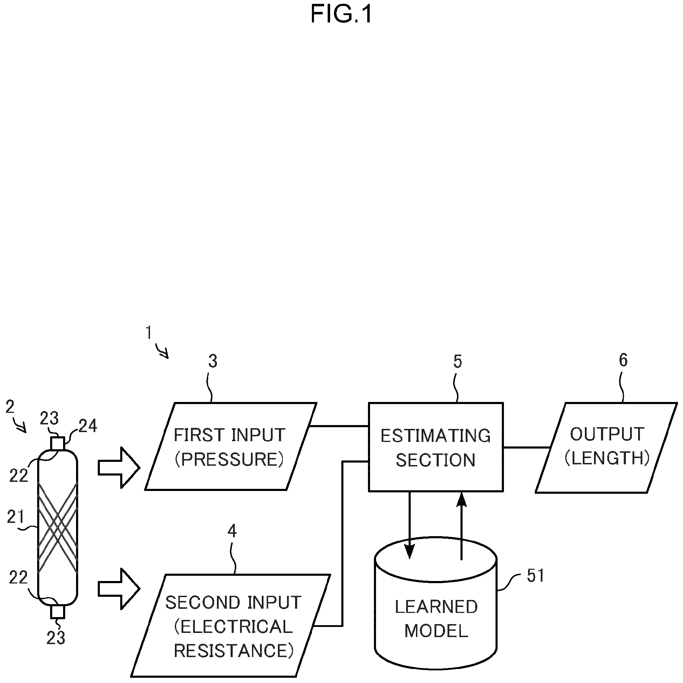

An example of the structure of a physical amount estimating device 1 of an elastic body, which serves as the estimating device of the present disclosure, is illustrated in Fig. 1.

Note that, in the present disclosure, a case is described in which, in order to grasp a physical amount of an elastic body, the technique of the present disclosure is applied to an elastic contracting body that includes a flexible elastic body such as a rubber member or the like among elastic bodies that deform non-linearly, and that generates contracting force in a predetermined direction from a physical amount that is applied thereto. Further, in the present disclosure, a case is described in which the technique of the present disclosure is applied to estimating processing that estimates the distance between both ends of an elastic contracting body that contracts in a predetermined direction (i.e., the length of the elastic contracting body), without using a dedicated sensor such as a distance sensor or the like.

Hereinafter, explanation is given of a case in which an airbag-type body of a known technique is used as an example of the elastic contracting body (see, for example, Japanese Patent Application Publication (JP-B) No. S52-40378).
An example of an airbag-type elastic contracting body (hereinafter called rubber actuator) is a structure having a main body 21 in which the outer periphery of a tubular body, which is structured from a flexible elastic body such as a rubber member or the like, is covered by a braided reinforcing structure of organic or inorganic high-tensile fibers, e.g., aromatic polyamide fibers, and both end openings 22 are sealed by blocking members 23. The rubber actuator deforms such that the diameter thereof increases due to a pressurized fluid being supplied into the internal cavity thereof via a connection port 24 provided at the blocking member 23, and contracting force is generated along the axial direction. The length of the rubber actuator varies due to this deformation that is such that the diameter increases. However, using a rubber actuator as the object of application of the technique of the present disclosure is merely an example, and the estimating device of the present disclosure can also be applied to members including elastic contracting bodies and elastic bodies that are other than a rubber actuator.

Further, explanation is given of a case in which the pressure value is used as the first physical amount that deforms the rubber actuator, the electrical resistance value is used as the second physical amount that varies in accordance with deformation of the rubber actuator, and the distance (i.e., the length of the rubber actuator) is used as the target physical amount that expresses the amount of deformation of the rubber actuator.

By using a learned model that has been learned by deep learning being carried out by using, as inputs, pressure data (i.e., pressure values) to the rubber actuator and electrical resistance data (i.e., electrical resistance values) of the rubber actuator whose labels are length data of the rubber actuator, the estimating processing at the physical amount estimating device 1 of an elastic body estimates and outputs length data of the rubber actuator corresponding to unknown pressure data and electrical resistance data of the rubber actuator.

Namely, the physical amount estimating device 1 of an elastic body estimates the length of a rubber actuator that varies non-linearly due to pressure supplied to the rubber actuator. Due thereto, even in the case of a member that deforms non-linearly, identification is possible without directly measuring non-linear deformation thereof.

As illustrated in Fig. 1, the physical amount estimating device 1 of an elastic body has an estimating section 5. First input data 3 that expresses the magnitude (the pressure value) of pressure to a rubber actuator 2, and second input data 4 that expresses the magnitude (the electrical resistance value) of the electrical resistance, are inputted to the estimating section 5. Further, the estimating section 5 outputs output data 6 that expresses the magnitude (the length) of the deformation of the rubber actuator 2, which is the results of estimation. The estimating section 5 includes a learned model 51 that has been learned.

The learned model 51 is a model that has been subjected to learning so as to derive the length of the rubber actuator 2 (the output data 6) from the pressure of the rubber actuator 2 (the first input data 3) and the electrical resistance of the rubber actuator 2 (the second input data 4). The learned model 51 is, for example, a model that prescribes a neural network that has been learned, and is expressed as a collection of information of the weights (strengths) of the connections between the nodes (neurons) that structure the neural network.

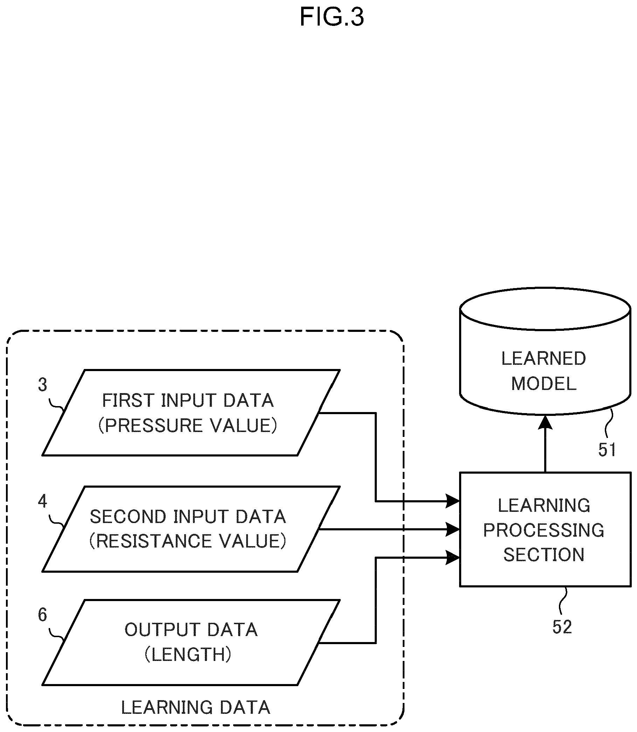

The learned model 51 is generated by learning processing by a learning processing section 52 (see Fig. 3). The learning processing section 52 carries out learning processing by using physical amounts that have been measured, as time-series physical amounts at the rubber actuator 2. Namely, the learning processing section 52 uses, as the learning data, a large amount of data in which a physical amount of the rubber actuator 2 has been measured in time series. The learning data includes a large amount of sets of input data, which include pressure values (the first input data 3) and electrical resistance value (the second input data 4), and lengths (the output data 6) corresponding to these input data. Here, for example, time series information is associated by applying information expressing the time of measurement to each of the lengths of the rubber actuator 2 (the output data 6). In this case, the time series information may be associated by applying information expressing the times of measurement to these sets.

The learning processing that is carried out by the learning processing section 52 is described next.

First, the learning data that is used in the learning processing is described.

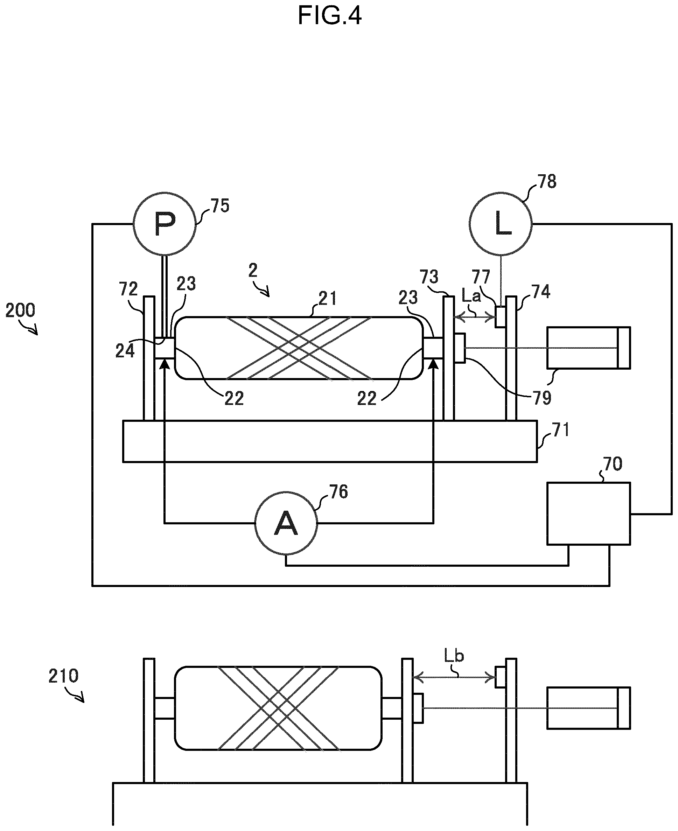

An example of a measuring device 7, which measures a physical amount of the rubber actuator 2, is illustrated in Fig. 4.

At the measuring device 7, one of the blocking members 23 of the rubber actuator 2 is mounted to a mounting plate 72 that is fixed to a stand 71, and the other blocking member 23 is mounted to a movable plate 73 that can move. A pressure sensor that detects pressure (the first physical amount that deforms the rubber actuator 2) is included at the connection port 24 of the rubber actuator 2. A supplying section 75, which supplies pressurized fluid to the rubber actuator 2, communicates with the connection port 24. Electrical characteristic detecting portions 76, which include sensors that detect the electrical characteristic value of the rubber actuator 2 (the second physical amount expressing the electric characteristic), are mounted to the blocking members 23 at the both ends of the rubber actuator 2. Further, a fixed plate 74, to which is mounted a distance sensor 77 such as a laser sensor or the like that detects the distance to the movable plate 73, is fixed to the stand 71. The distance sensor 77 is connected to a length identifying section 78. The length identifying section 78 identifies the length of the rubber actuator 2 (the target physical amount expressing the amount of deformation of the rubber actuator 2) from the distance detected by the distance sensor 77. For example, the length identifying section 78 stores, as initial values, length L of the rubber actuator 2 and distance (La) detected by the distance sensor 77, which are of the initial state in which the pressurized fluid is not supplied (illustrated as initial state 200 in Fig. 4). Then, by subtracting the difference of the distance of the state in which pressurized fluid is supplied (illustrated as supplied state 210 in Fig. 4) from the length in the initial state, the length identifying section 78 can identify the length (L = Lb - La) of the rubber actuator 2. Note that an air pressure detecting portion 79, which is structured from a load cell and an air pressure cylinder, can be mounted to the measuring device 7.

The measuring device 7 has a controller 70 that is connected to the supplying section 75, the electrical characteristic detecting portions 76 and the length identifying section 78. The controller 70 carries out control of the supplying section 75, and acquires and stores the pressure value, the electrical resistance value and the length of the rubber actuator 2 at the time when the pressurized fluid is supplied to the rubber actuator 2.

The measuring device 7 can, in the control of the supplying of the pressurized fluid, acquire, in time series, plural data sets of a pressure value, an electrical resistance value and a length of the rubber actuator 2 whose length varies non-linearly (see Fig. 2), with respect to the pressure values at the side of increased pressure and the side of decreased pressure in time series.

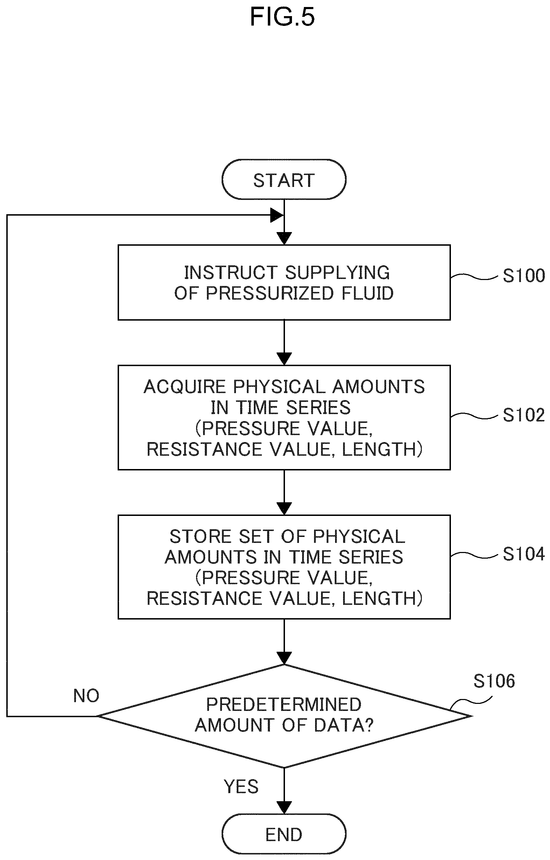

The controller 70 can be structured to include a computer that includes an unillustrated CPU, and executes learning data collecting processing. Namely, as illustrated as an example of the learning data collecting processing in Fig. 5, in step S100, the controller instructs the supplying section 75 to supply pressurized fluid. In step S102, the controller acquires, in time series, the pressure value, the electrical resistance value and the length of the rubber actuator 2, and stores the values in next step S104. The controller 70 repeats the above-described processings until the number of sets of these pressure value, electrical resistance value and length of the rubber actuator 2 reaches a predetermined number that is set in advance, or until a predetermined time that is set in advance is reached (in step S106, the judgment is negative until becoming positive).

Accordingly, due to the controller 70 carrying out control of the supplied amount of the pressurized fluid to the rubber actuator 2 (i.e., carrying out control of the supplying section 75), the controller 70 can, in time series, acquire and store pressure values, electrical resistance values and lengths of the rubber actuator 2. The sets of a pressure value, an electrical resistance value and a length of the rubber actuator 2 that are stored in time series in the controller 70 are the learning data.

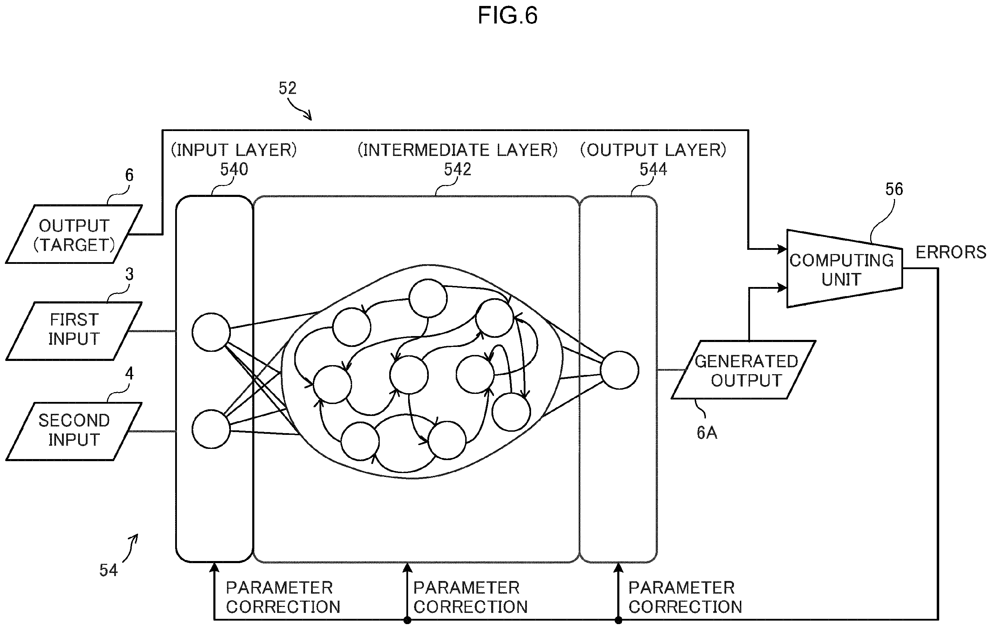

The learning processing section 52 is described next with reference to Fig. 6.

The learning processing section 52 includes a generator 54 and a computing unit 56. The generator 54 has the function of generating output in consideration of the before/after relationships of the time-series inputs.

Further, the learning processing section 52 holds, as data for learning, a large number of sets of the first input data 3 (pressure) and the second input data 4 (electrical resistance), and the output data 6 (length), which were measured at the measuring device 7.

In the example illustrated in Fig. 6, the generator 54 includes an input layer 540, an intermediate layer 542 and an output layer 544, and structures a known neural network, e.g., a recurrent neural network (RNN). Because recurrent neural networks themselves are known techniques, detailed description thereof is omitted, but the intermediate layer 542 includes a larger number of node groups (neuron groups) having connections between nodes and feedback connections. Data from the input layer 540 is inputted to the intermediate layer 542, and data that is the results of calculation of the intermediate layer 542 is outputted to the output layer 544.

Specifically, the generator 54 is a neural network that, from the inputted first input data 3 (pressure) and second input data 4 (electrical resistance), generates generated output data 6A that expresses length. The generated output data 6A is data in which the length of the rubber actuator 2 is estimated from the first input data 3 (pressure) and the second input data 4 (electrical resistance). The generator 54 generates the generated output data, which expresses a length close to the measured value of the length of the rubber actuator 2 due to non-linear deformation, from the first input data 3 (pressure) and the second input data 4 (electrical resistance) that are inputted in time series. Due to the generator 54 learning by using the large number of first input data 3 (pressure) and second input data 4 (electrical resistance), the generator 54 can generate the generated output data 6A that is closer to the measured value of the length of the rubber actuator.

The computing unit 56 is a computing unit that compares the generated output data 6A and output data 6 of the learning data, and computes the error of the results of comparison. The learning processing section 52 inputs the generated output data 6A and the output data 6 of the learning data to the computing unit 56. In accordance therewith, the computing unit 56 computes the error between the generated output data 6A and the output data 6 of the learning data, and outputs a signal expressing these results of computation.

On the basis of the error computed at the computing unit 56, the learning processing section 52 carries out learning of the generator 54 that tunes the weighting parameters of the connections between the nodes. Specifically, the learning processing section 52 feeds-back, to the generator 54 and by using a technique such as, for example, gradient descent or error backpropagation or the like, the weighting parameters of the connections between the nodes of the input layer 540 and the intermediate layer 542 at the generator 54, and the weighting parameters of the connections between the nodes within the intermediate layer 542, and the weighting parameters of the connections between the nodes of the intermediate layer 542 and the output layer 544, respectively. Namely, all of the connections between the nodes are optimized so as to minimize the errors between the generated output data 6A and the output data 6 of the learning data, with the output data 6 of the learning data as the target.

The learned model 51 is generated by the learning processing of the learning processing section 52. The learned model 51 is expressed as a collection of information of the weighting parameters (the weights or strengths) of the connections between the nodes that are the results of learning by the learning processing section 52.

Accordingly, due to the controller 70 carrying out control of the supplied amount of pressurized fluid to the rubber actuator 2 (i.e., carrying out control of the supplying section 75), the pressure value, the electrical resistance value and the length of the rubber actuator 2 can be acquired and stored in time series. Accordingly, the correlation of the length that varies non-linearly in correspondence with the pressure value and the electrical resistance value, which vary in time series, is acquired. The sets of the pressure value, the electrical resistance value and the length of the rubber actuator 2, which are stored in time series in the controller 70, are the learning data.

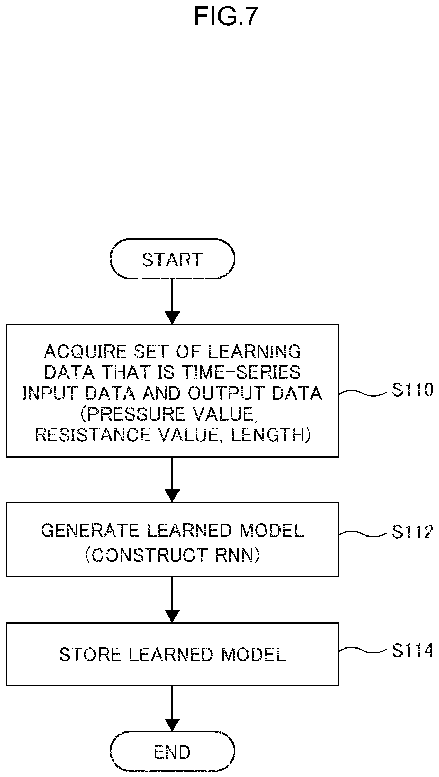

The learning processing section 52 is structured to include a computer including an unillustrated CPU, and can execute learning processing. For example, as illustrated as an example of the learning processing in Fig. 7, in step S110, the learning processing section 52 acquires the first input data 3 (pressure), the second input data 4 (electrical resistance) and the output data 6 (length) that are learning data that are results that have been measured in time series. In step S112, the learning processing section 52 generates the learned model 51 by using the learning data that are results that have been measured in time series. Namely, the learning processing section 52 acquires the collection of information of the weighting parameters (the weights or strengths) of the connections between the nodes that are the results of learning that have been learned by using the large number of learning data as described above. Then, in step S114, the learning processing section 52 stores, as the learned model 51, data that is expressed as a collection of information of the weighting parameters (the weights or strengths) of the connections between the nodes that are the results of learning.

Note that the generator 54 has the function of generating output in consideration of the before/after relationships of the time-series inputs. The above describes an example in which a recurrent neural network is used, but the technique of the present disclosure is not limited to using a recurrent neural network. Namely, it suffices for the technique of the present disclosure to have the function of generating output in consideration of the before/after relationships of the time-series inputs, and another method may be used.

Further, in the above-described physical amount estimating device 1 of an elastic body, the learned generator 54 that has been generated by the method exemplified above (i.e., the data expressed as a collection of information of the weighting parameters of the connections between the nodes that are the results of learning) is used as the learned model 51. If the learned model 51 that has been sufficiently learned is used, it is not impossible to identify length from time-series pressure values and electrical resistance values for a rubber actuator that deforms non-linearly.

Note that the processing by the learning processing section 52 is an example of the processing of the learned model generating device of the present disclosure. Further, the physical amount estimating device 1 of an elastic body is an example of the estimating section and the estimating device of the present disclosure.

The above-described physical amount estimating device 1 of an elastic body can be realized by, for example, causing a computer to execute a program expressing the above-described respective functions.

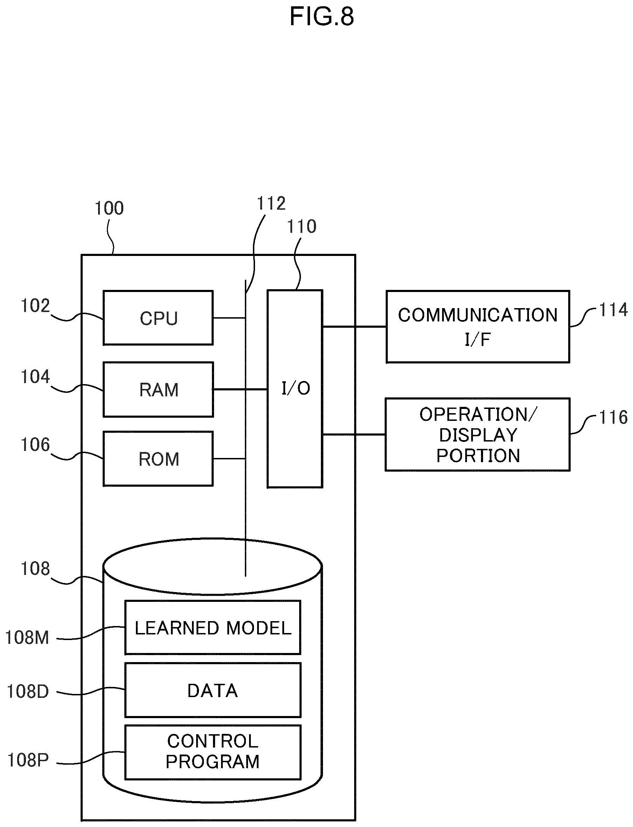

Fig. 8 illustrates an example of a case of a structure that includes a computer as an executing device that executes processing that realizes the various functions of the physical amount estimating device 1 of an elastic body.

The computer, which is illustrated in Fig. 8 and functions as the physical amount estimating device 1 of an elastic body, has a computer main body 100. The computer main body 100 has a CPU 102, a RAM 104 such as a volatile memory or the like, a ROM 106, an auxiliary storage device 108 such as a hard disk drive (HDD) or the like, and an input/output interface (I/O) 110. The CPU 102, the RAM 104, the ROM 106, the auxiliary storage device 108 and the input/output I/O 110 are structures that are connected via a bus 112 so as to be able to transmit and receive data and commands to and from one another. Further, a communication interface (I/F) 114 and an operation/display portion 116 such as a display and keyboard and the like are connected to the input/output I/O 110. The communication I/F 114 functions as an input/output section that inputs/outputs at least one of the first input data 3 (pressure), the second input data 4 (electrical resistance) and the output data 6 (length) from and to an external device.

A control program 108P, which is for causing the computer main body 100 to function as the physical amount estimating device 1 of an elastic body that serves as an example of the estimating device of the present disclosure, is stored in the auxiliary storage device 108. The CPU 102 reads-out the control program 108P from the auxiliary storage device 108, and expands the program in the RAM 104 and executes processing. Due thereto, the computer main body 100 that executes the control program 108P operates as the physical amount estimating device 1 of an elastic body that serves as an example of the estimating device of the present disclosure.

Note that a learned model 108M that includes the learned model 51, and data 108D that includes various data, are stored in the auxiliary storage device 108. The control program 108P may be provided by a recording medium such as a CD-ROM or the like.

The estimating processing at the physical amount estimating device of an elastic body that is realized by a computer is described next.

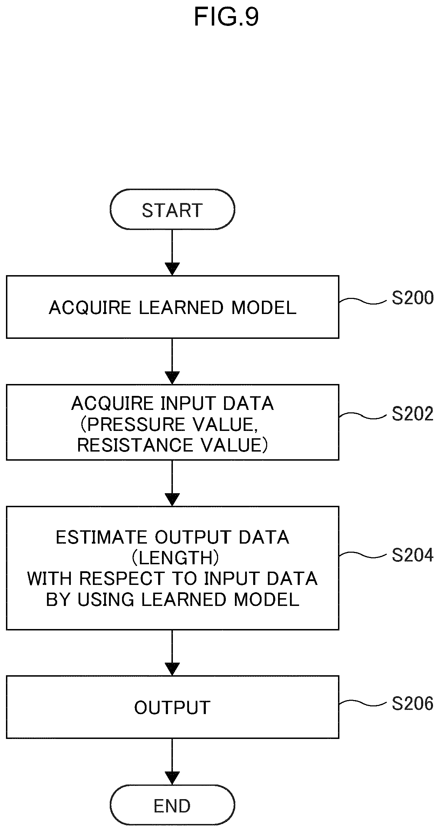

Fig. 9 illustrates an example of the flow of estimating processing in accordance with the control program 108P that is executed at the computer main body 100.

The estimating processing illustrated in Fig. 9 is executed by the CPU 102 when the power of the computer main body 100 is turned on. Namely, the CPU 102 reads-out the control program 108P from the auxiliary storage device 108, and expands the program in the RAM 104 and executes processing.

First, in step S200, the CPU 102 reads-out the learned model 51 from the learned model 108M of the auxiliary storage device 108, and expands the learned model 51 in the RAM 104, and thereby acquires the learned model 51. Specifically, the CPU 102 expands, in the RAM 104, the network model that is connections between nodes in accordance with weighting parameters and that is expressed as the learned model 51. Accordingly, the learned model 51, in which connections between nodes in accordance with weighting parameters are realized, is constructed.

Next, in step S202, the CPU 102 acquires, in time series and via the communication I/F 114, the unknown first input data 3 (pressure) and the unknown second input data 4 (electrical resistance) that are objects for estimating the length of the rubber actuator 2.

Next, in step S204, the CPU 102 uses the learned model 51 that was acquired in step S200 and estimates the output data 6 (the length of the rubber actuator 2) that corresponds to the first input data 3 (pressure) and the second input data 4 (electrical resistance) that were acquired in step S202.

Namely, in accordance the pressure values and the electrical resistance values that vary in time series, and from a pressure value and an electrical resistance value at a given point in time, the length, which varies non-linearly in accordance with the change in the pressure value and the electrical resistance value at a point in time after that, is estimated.

Then, in next step S206, the output data 6 that is the results of estimation (the length of the rubber actuator 2) is outputted via the communication I/F 114, and the present processing routine is ended.

Note that the estimating processing illustrated in Fig. 9 is an example of the processing that is executed by the estimating method of the present disclosure.

As described above, in accordance with the present disclosure, the length of the rubber actuator 2 can be estimated from the unknown first input data 3 (pressure) and second input data 4 (electrical resistance) for the rubber actuator 2. Namely, the length of the rubber actuator 2 can be estimated without directly measuring the non-linear deformation of the rubber actuator 2 that deforms non-linearly. Accordingly, by detecting pressure values and electrical resistance values of the rubber actuator 2 in time series, the length of the rubber actuator 2 can be identified, and a sensor that directly measures the length is not needed. Due thereto, in accordance with the present disclosure, an increase in size of devices and structures that use the rubber actuator 2 can be suppressed.

### (Second Embodiment)

A second embodiment is described next. The second embodiment takes improving the estimating speed into consideration in the estimating of the length of the rubber actuator 2. Note that the second embodiment is structured substantially similarly to the first embodiment, and therefore, the same portions are denoted by the same reference numerals, and detailed description thereof is omitted.

In a general recurrent neural network, information of the weighting parameters is optimized for each of the connections of the nodes from the input layer 540 to the intermediate layer 542, the connections between nodes and the feedback connections at the intermediate layer 542, and the connections between the nodes from the intermediate layer 542 to the output layer 544 (see Fig. 6). However, a very large amount of learning time is required in learning that uses time-series data having a temporal correlation with respect to the rubber actuator 2 that deforms non-linearly. Further, a very large memory also is needed in order to carry out temporal retrospection when learning by using time-series learning data.

With the object being to reduce learning time that requires a very large amount of time, a known network model called reservoir computing can be applied to the estimating of the length of the rubber actuator 2 that deforms non-linearly. Because the network model (hereinafter called RCN) that is called reservoir computing (RC) itself is a known technique, detailed description thereof is omitted. However, in an example of RCN, part of a recurrent neural network is fixed (is replaced with a random network), and only the connections between the nodes from the intermediate layer 542 to the output layer 544 are optimized.

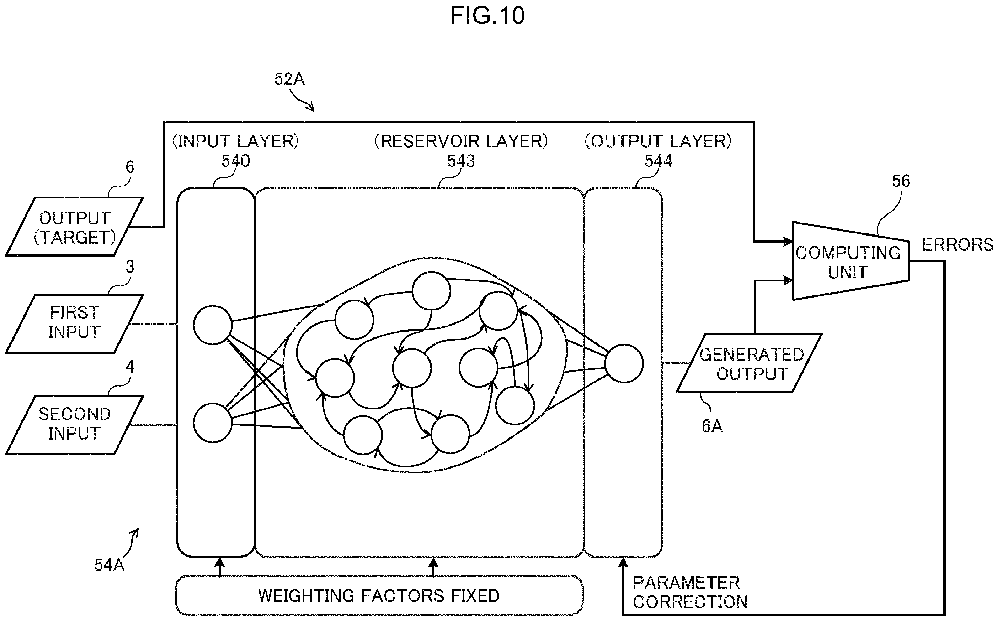

Learning processing at a learning processing section 52A that uses an RCN is described with reference to Fig. 10. The learning processing section 52A illustrated in Fig. 10 differs from the learning processing section 52 illustrated in Fig. 6 with regard to the point that the generator 54 illustrated in Fig. 6 is replaced by a generator 54A, and learning is carried out by reflecting the errors, which are derived by the computing unit 56, only at the output layer 544 side.

As illustrated in Fig. 10, the generator 54A of the learning processing section 52 includes the input layer 540 that is the same as in Fig. 6, and, instead of the intermediate layer 542 of Fig. 6, includes a reservoir layer 543 of a similar structure as in Fig. 6, and includes the output layer 544 that is the same as in Fig. 6, and the generator 54A structures a known RCN. In an RCN, information of fixed weighting parameters (hereinafter called weighting factors) are set for the connections of the nodes from the input layer 540 to the reservoir layer 543, and the connections between the nodes and the feedback connections at the reservoir layer 543. Further, the connections between the nodes from the reservoir layer 543 to the output layer 544 are, for example, made to be linear connections, and the respective weighting parameters are optimized by learning of the learning data.

The fixed weighting factors are set in advance. Factors that have been set as initial values can be set as the fixed weighting factors. Further, weighting factors in a case of having optimized the connections between the nodes and the like over only a predetermined number of times or a predetermined time period that is insufficient for minimizing errors, may be set as the fixed weighting factors by using learning data, and with the output data 6 of the learning data being the target, so as to minimize the errors between the generated output data 6A and the output data 6 of the learning data.

On the other hand, the weighting parameters that prescribe the connections between the nodes from the reservoir 543 to the output layer 544 are derived by learning by using a large number of learning data, so as to minimize the errors between the generated output data 6A and the output data 6 of the learning data.

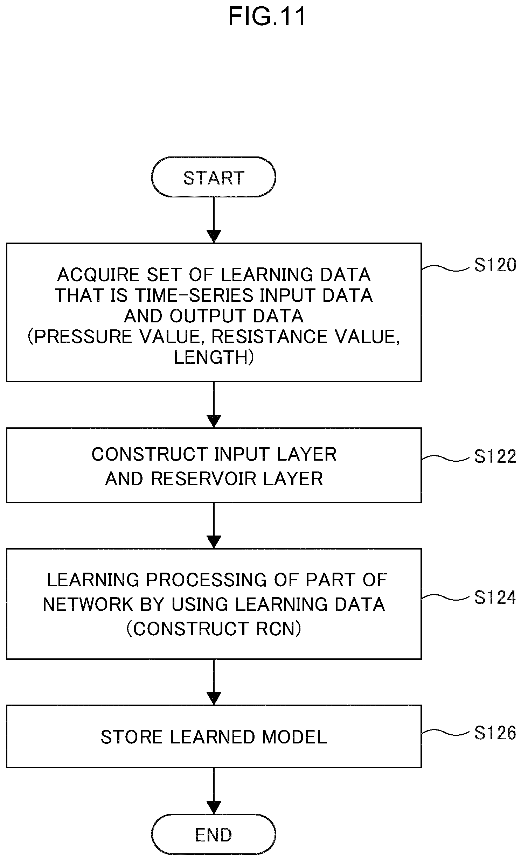

The learning processing section 52A that includes the generator 54A is structured to include a computer including an unillustrated CPU, and can execute learning processing. For example, as illustrated as an example of the learning processing in Fig. 11, in step S120, the learning processing section 52A acquires the first input data 3 (pressure), the second input data 4 (electrical resistance) and the output data 6 (length) that are learning data that are results that have been measured in time series.

In step S122, the learning processing section 52A constructs the input layer 540 and the reservoir layer 543. Here, although similar to the generator 54 illustrated in Fig. 6, description is given of a case of carrying out learning processing by using some of the learning data. Specifically, learning processing is carried out by using some of the learning data. The collection of information of the weighting parameters of the connections between the nodes, which is the learned results that have been learned by using some of the learning data, is acquired, and the connections of the nodes from the input layer 540 to the reservoir layer 543, and the connections between the nodes and the feedback connections at the reservoir layer 543, are derived as the weighting factors. The input layer 540 and the reservoir layer 543 are constructed by identifying the input layer 540 and the reservoir layer 543 from these derived weighting factors.

Next, in step S124, the learning processing section 52A generates the learned model 51 by using a large number of learning data that are results that have been measured in time series. Namely, as described above, the RCN is constructed by carrying out learning with respect to only the connections between the nodes from the reservoir layer 543 to the output layer 544, and acquiring the collection of information of the weighting parameters of the connections between the nodes that are the results of learning. Then, in step S126, data, which is expressed as the collection of information of the weighting factors derived in step S122 and the weighting parameters of the connections between the nodes that are the results of learning of step S124, is stored as the learned model 51.

Then, at the above-described physical amount estimating device 1 of an elastic body, the learned generator 54A that was generated by the method exemplified above is used as the learned model 51. Namely, here, the weighting factors, which express the connections of the nodes from the input layer 540 to the reservoir layer 543 and the connections between the nodes and the feedback connections at the reservoir layer 543, and the weighting parameters that express the connections between the nodes from the reservoir layer 543 to the output layer 544, correspond to the learned model 51. If the learned model 51 that has been sufficiently learned is used, it is not impossible to identify length, which varies non-linearly, from time-series pressure values and electrical resistance values for a rubber actuator that deforms non-linearly.

As described above, in accordance with the present disclosure, instead of a general recurrent neural network, a network is constructed from an RCN, and the learned model 51 is optimized. Due thereto, the learning time that is needed can be reduced as compared with a case of constructing a learned model from a general recurrent neural network.

Further, a very large memory (memory capacity) that is needed in order to carry out temporal retrospection in a general recurrent neural network also can be suppressed.

### (Third Embodiment)

A third embodiment is described next. The third embodiment takes into consideration improving the results of learning of the learned model 51 that is for estimating of the length of the rubber actuator 2. Note that the third embodiment is structured substantially similarly to the first embodiment and second embodiment, and therefore, the same portions are denoted by the same reference numerals, and detailed description thereof is omitted.

As described above, the learning time can be reduced by using an RCN in which part of a recurrent neural network is fixed. By the way, in a case of using fixed weighting parameters for the connections of the nodes from the input layer 540 to the reservoir layer 543 and for the connections between the nodes and the feedback connections at the reservoir layer 543, the results of learning may be insufficient. This is because there are cases in which, even if the weighting parameters of the connections between the nodes from the reservoir layer 543 to the output layer 544 are learned, at the reservoir layer 543 at which are set nodes of a number that is limited by the fixed weighting parameters, the output from the reservoir layer 543 is not output that is sufficient for optimization. Therefore, although making the structure of the recurrent neural network that is used in the reservoir layer 543 complex can be imagined, this is not preferable because time for setting the reservoir layer 543 is required.

By the way, as is known, reservoir computing (RCN) projects the inputs into a characteristic space of high dimensionality by non-linear conversion into a high dimensional space. With regard to this point, there is known a network model (hereinafter called PRCN) that is called physical reservoir computing (PRC) that uses a non-linear dynamic system in the reservoir layer 543 instead of a recurrent neural network. Because PRC and PRCNs themselves are known techniques, detailed description thereof is omitted, but they can be used as techniques that accumulate, in the reservoir layer 543, data relating to deformation of the rubber actuator 2 that deforms non-linearly. Namely, a PRCN can be suitably used in estimating the length of the rubber actuator 2 that deforms non-linearly.

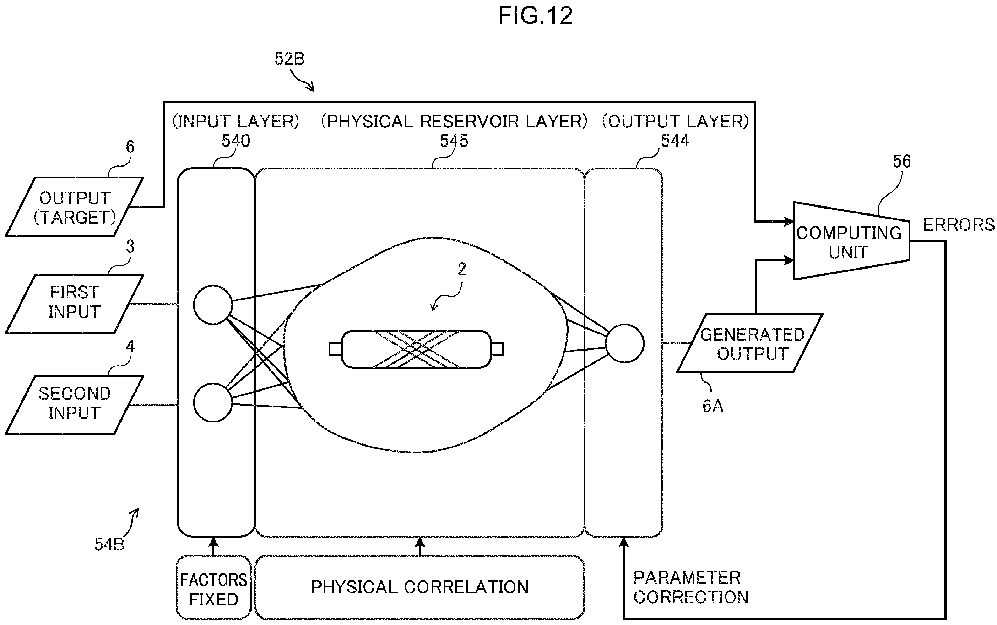

Learning processing at a learning processing section 52B is described with reference to Fig. 12. The learning processing section 52B illustrated in Fig. 12 differs from the learning processing section 52A illustrated in Fig. 10 with regard to the points that the generator 54A illustrated in Fig. 10 is replaced with a generator 54B, and learning is carried out by reflecting the errors derived by the computing unit 56 only at the output layer 544 side.

As illustrated in Fig. 12, the generator 54B of the learning processing section 52B includes the input layer 540 that is the same as in Fig. 6, and, instead of the reservoir layer 543 of Fig. 10, includes a physical reservoir layer 545, and includes the output layer 544 that is the same as in Fig. 6, and the generator 54B structures a known PRCN. Because PRCNs themselves are a known technique, detailed description thereof is omitted, but, in a PRCN, fixed weighting factors are set as described above for the connections of the nodes from the input layer 540 to the reservoir layer 543. The physical reservoir layer 545 is a structure that accumulates characteristic amounts for a large number of time-series correlations, and outputs plural characteristic amounts that are close to the input. Further, the connections between the nodes from the physical reservoir layer 545 to the output layer 544 are made to be linear connections for example, and the respective weighting parameters are optimized by learning that optimizes the errors between the generated output data 6A and the output data 6 of the learning data by using a large number of learning data.

Note that, as described above, factors that are set as initial values may be set as the fixed weighting factors, or, by using learning data, weighting factors in a case of optimizing over a predetermined number of times or a predetermined time period may be set therefor.

The physical reservoir layer 545 accumulates a large number of physical correlations in time series of the rubber actuator 2, and extracts the lengths that correspond to the input data (the pressure values and the electrical resistance values) that are near to the unknown input data (the pressure value and the electrical resistance value) from the input layer 540, and outputs the lengths to the output layer 544 as plural characteristic amounts. To summarize, a large number of correlations between the length, which is non-linear behavior, with respect to the pressure value and the electrical resistance value, which vary in time series, are stored as the behavior of the rubber actuator 2, and plural lengths of the rubber actuator 2, which are near to the unknown inputs (pressure value and electrical resistance value) that vary in time series, are respectively selected and outputted as characteristic amounts. Due thereto, the executing of complex computation can be suppressed.

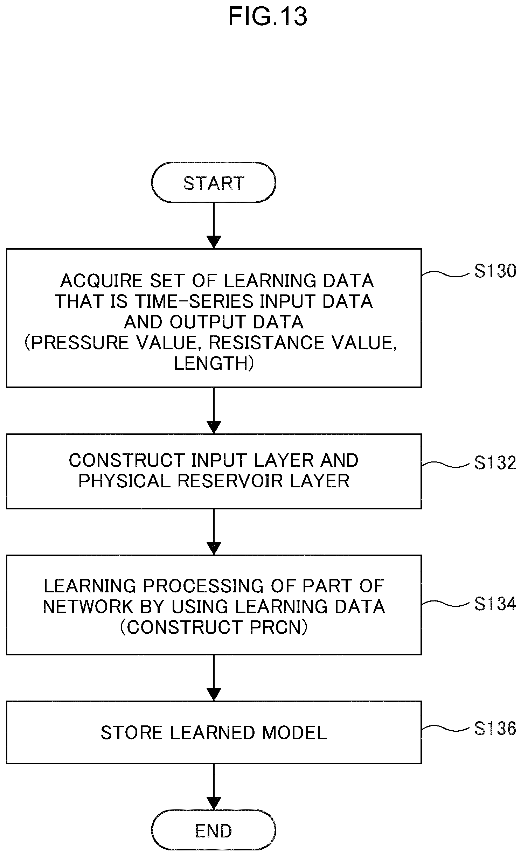

The learning processing section 52B that includes the generator 54B is structured to include a computer that includes an unillustrated CPU, and can execute learning processing. For example, as illustrated as an example of the learning processing in Fig. 13, in step S130, the learning processing section 52B acquires the first input data 3 (pressure), the second input data 4 (electrical resistance) and the output data 6 (length) that are learning data that are results that have been measured in time series.

In step S132, the learning processing section 52B constructs the input layer 540 and the physical reservoir layer 545. It is considered that predetermined weighting factors are set at the input layer 540. Accordingly, the input layer 540 is constructed by identifying, from the predetermined weighting factors, the connections of the nodes from the input layer 540 to the physical reservoir layer 545. On the other hand, the physical reservoir layer 545 accumulates a large number of respective learning data, i.e., correlations of length that is non-linear behavior with respect to pressure value and electrical resistance value that vary in time series. Accordingly, the physical reservoir layer 545 is constructed by being structured such that correlations of length that is non-linear behavior with respect to pressure value and electrical resistance value that vary in time series which correlations are from the learning data, are accumulated as characteristic amounts, and plural characteristic amounts that are close to the inputs are outputted from thereamong.

Next, in step S134, the learning processing section 52B generates the learned model 51 by using a large number of learning data that are results that have been measured in time series. Namely, as described above, the PRCN is constructed by carrying out learning with respect to only the connections between the nodes from the physical reservoir layer 545 to the output layer 544, and acquiring the collection of information of the weighting parameters of the connections between the nodes that are the results of learning. Then, in step S136, data, which is expressed as the collection of information of the weighting factors derived in step S132 and the weighting parameters of the connections between the nodes that are the results of learning of step S134, is stored as the learned model 51.

Then, at the above-described physical amount estimating device 1 of an elastic body, the learned generator 54B that was generated by the method exemplified above is used as the learned model 51. Namely, here, the weighting parameters, which express the connections of the nodes from the input layer 540 to the physical reservoir layer 545, and the correlations of the physical reservoir layer 545, and the connections between the nodes from the physical reservoir layer 545 to the output layer 544, correspond to the learned model 51.

With respect to a pressure value and an electrical resistance value of the rubber actuator 2 that are unknown input data, the physical amount estimating device 1 of an elastic body extracts, from among the physical correlations in time series of the rubber actuator 2 that are stored in the physical reservoir layer 545, lengths that correspond to the input data (pressure values and electrical resistance values) that are near to the unknown input data (pressure values and electrical resistance values) that are from the input layer 540, and outputs these lengths to the output layer 544 as plural characteristic amounts. Then, the output layer 544 makes the plural characteristic amounts from the physical reservoir layer 545 into linear connections for example by the learned weighting parameters, and estimates the lengths of the rubber actuator 2. If the learned model 51 that has been sufficiently learned is used, it is not impossible to identify length from time-series pressure values and electrical resistance values for a rubber actuator that deforms non-linearly.

As described above, in accordance with the present disclosure, a network is constructed from a PRCN instead of an RCN, and the learned model 51 is optimized. Due thereto, an improvement in the results of learning of the learned model 51 is devised as compared with a case in which the learned model is constructed from an RCN.

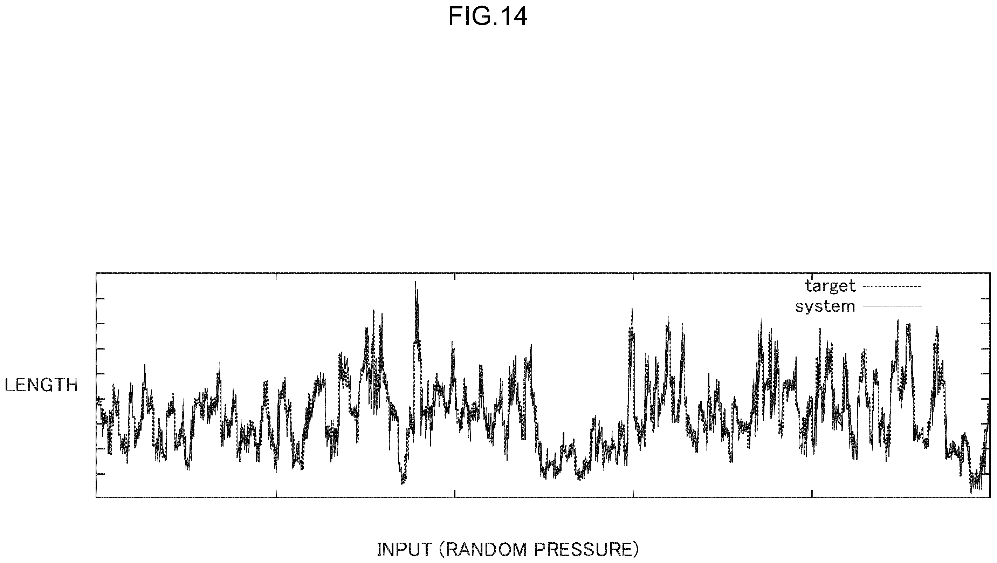

Fig. 14 illustrates respective characteristics of measured values of the length of the rubber actuator 2 with respect to pressures that have been actually measured by the measuring device 7, and estimated values of the length which have been estimated by the physical amount estimating device 1 of an elastic body. In the example of Fig. 14, pressure is applied randomly to the rubber actuator 2, and the characteristic of the measured values that have been actually measured exhibits fluctuations in the length of the rubber actuator 2 with respect to the pressure that is applied randomly. Further, the characteristic of the estimated values of the length that have been estimated exhibits fluctuations in the estimated length of the rubber actuator 2 with respect to pressure values and electrical resistance values of the rubber actuator 2 that vary in time series. From Fig. 14, it can be understood that the measured values that have been actually measured and the estimated values that have been estimated approximate one another very well.

A case is described above in which, in the present disclosure, a rubber actuator is used as the member, but the member is, of course, not limited to a rubber actuator. Further, description has been given of a case in which, as the at least three physical amounts of different types that vary in accordance with deformation of the member, the pressure value that expresses the magnitude of pressure is used as the first physical amount, the electrical resistance value that expresses the magnitude of the electrical characteristic is used as the second physical amount, the length that expresses the magnitude of deformation is used as the target physical amount, and the length is estimated from the pressure value and the electrical resistance value. However, the first physical amount, the second physical amount and the target physical amount respectively are not limited to these, and the pressure value or the electrical resistance value may be set as the target physical amount.

Although the present disclosure has been described above by using respective embodiments, the technical scope of the present disclosure is not limited to the scope put forth in the above-described embodiments. Various modifications and improvements can be made to the above-described embodiments within the scope defined by the claims.

Further, although the above embodiments describe cases in which the respective processing is realized by software structures in accordance with processings using flowcharts, the present disclosure is not limited to this, and may be a form in which the respective processings are realized by hardware structures for example.

## Claims

1. An estimation device, comprising:
an estimation section (5) that comprises a trained model (51) that is trained by using, as training data, a plurality of physical values comprising at least three physical values which are measured by corresponding sensors, which are of different types, which vary in accordance with deformation of a member (2) deforming non-linearly and that include a target physical value (6) that expresses the amount of deformation of the member and with which time-series information is associated in the training data, the trained model (51) having inputs comprising at least two physical values (3, 4) other than the target physical value (6) and being configured to output the target physical value (6);
wherein:
the device is configured to acquire from corresponding sensors and to input the at least two physical values (3,4) measured by said corresponding sensors, of an object of estimation which is different from the member (2) and which deforms non-linearly, and estimate the target physical value (6) of the object of estimation,
an electrical characteristic of the member (2) varies in accordance with the deformation, and the at least two physical values include a first physical value (3) which is a magnitude of a pressure that deforms the member (2), a second physical value (4) expressing the electrical characteristic that varies in accordance with the deformation of the member (2), and the target physical amount (6) expresses an amount of non-linear deformation of the member (2), and
the trained model (51) being configured to use the first physical value (3) and the second physical value (4) as inputs that are measured by corresponding sensors, and to output the target physical value (6) that corresponds to the first physical value (3) and the second physical value (4).

2. The estimation device of claim 1, wherein:
the member (2) includes an elastic body (21) having an interior that is formed to be hollow, a pressurized fluid being supplied to the hollow interior, and the elastic body (21) generating contracting force in a predetermined direction,
the first physical value (3) is a pressure value expressing a supplied state of the pressurized fluid that is supplied to the elastic body (21), and
the second physical value (4) is an electrical resistance value of the elastic body (21), and the target physical value (6) is a distance of the elastic body (21) in the predetermined direction.

3. The estimation device of claim 1 or claim 2, wherein the trained model (51) is a model generated by training using a recurrent neural network.

4. The estimation device of any one of claim 1, claim 2 or claim 3, wherein the trained model (51) is a model generated by training using a network in accordance with reservoir computing.

5. The estimation device of any one of claim 1 through claim 3, wherein the trained model (51) is a model generated by training using a network in accordance with physical reservoir computing that uses a reservoir that accumulates the at least three physical values of a member (2) that deforms non-linearly.

6. An estimation method in which the learning model of a computer configured to function as an estimation device as claimed in claim 1:
measures, by corresponding sensors, the two physical values (3,4) of the object of estimation;
inputs the two physical values (3, 4) of the object of estimation that are measured by corresponding sensors, and
estimates the target physical value (6) corresponding to the object of estimation.

7. A program for causing a computer to function as an estimation device as claimed in claim 1 by:
measuring, by corresponding sensors, the two physical values (3,4) of the object of estimation;
inputing the two physical values (3, 4) of the object of estimation that are measured by corresponding sensors, and
estimating the target physical value (6) corresponding to the object of estimation.

8. A trained model generation device for generating a trained model that is used in the estimation device as claimed in claim 1 comprising:
an acquisition section configured to acquire the at least three physical values from corresponding sensors; and
a trained model generation section (52) configured, on the basis of a result of acquisition by the acquisition section, to generate a trained model (51) of an estimation device as claimed in claim 1, the trained model having inputs comprising the at least two physical values, the trained model (51) being trained to output the third physical value which is a target physical value (6) which corresponds to the first physical value (3) and the second physical value (4) and expresses an amount of non-linear deformation of a member.

## Patentansprüche

1. Schätzvorrichtung, umfassend:
einen Schätzabschnitt (5), der ein trainiertes Modell (51) umfasst, das unter Verwendung einer Vielzahl physikalischer Werte als Trainingsdaten trainiert wird, die mindestens drei physikalische Werte umfassen, die von entsprechenden Sensoren gemessen werden, die unterschiedlicher Art sind, sich in Übereinstimmung mit einer Verformung eines sich nichtlinear verformenden Bauteils (2) ändern und einen physikalischen Zielwert (6) beinhalten, der das Ausmaß der Verformung des Bauteils ausdrückt und dem Zeitreiheninformationen in den Trainingsdaten zugeordnet sind,
wobei das trainierte Modell (51) Eingaben aufweist, umfassend
mindestens zwei physikalische Werte (3, 4), die nicht der physikalische Zielwert (6) sind und so konfiguriert sind, dass sie den physikalischen Zielwert (6) ausgeben;
wobei:
die Vorrichtung so konfiguriert ist, dass sie von entsprechenden Sensoren mindestens zwei physikalische Werte (3,4) eines Schätzobjekts, das sich von dem Bauteil (2) unterscheidet und sich nichtlinear verformt, erfasst und eingibt und den physikalischen Zielwert (6) des Schätzobjekts schätzt,
eine elektrische Kenngröße des Bauteils (2) sich in Übereinstimmung mit der Verformung ändert, und die mindestens zwei physikalischen Werte einen ersten physikalischen Wert (3) beinhalten, der die Größe eines Drucks angibt, der das Bauteil (2) verformt, einen zweiten physikalischen Wert (4), der die elektrische Kenngröße beschreibt, die sich in Übereinstimmung mit der Verformung des Bauteils (2) ändert, und die Zielgröße (6) ein Ausmaß nichtlinearer Verformung des Bauteils (2) angibt, und
das trainierte Modell (51) so konfiguriert ist, dass es den ersten physikalischen Wert (3) und den zweiten physikalischen Wert (4) als Eingaben verwendet, die von entsprechenden Sensoren gemessen werden, und den Zielwert (6) ausgibt, der dem ersten physikalischen Wert (3) und dem zweiten physikalischen Wert (4) entspricht.

2. Schätzvorrichtung nach Anspruch 1, wobei:
das Bauteil (2) einen elastischen Körper (21) beinhaltet, der einen Innenraum aufweist, der hohl auszubilden ist, ein unter Druck stehendes Fluid in den hohlen Innenraum geleitet wird, und der elastische Körper (21) eine zusammenziehende Kraft in einer vorgegebenen Richtung erzeugt,
der erste physikalische Wert (3) ein Druckwert ist, der einen zugeführten Zustand des unter Druck stehenden Fluids ausdrückt, das dem elastischen Körper (21) zugeführt wird, und
der zweite physikalische Wert (4) ein elektrischer Widerstandswert des elastischen Körpers (21) ist und der physikalische Zielwert (6) ein Abstand des elastischen Körpers (21) in der vorgegebenen Richtung ist.

3. Schätzvorrichtung nach Anspruch 1 oder Anspruch 2, wobei das trainierte Modell (51) ein durch Training unter Verwendung eines rekurrenten neuronalen Netzwerks erzeugtes Modell ist.

4. Schätzvorrichtung nach einem von Anspruch 1, Anspruch 2 oder Anspruch 3, wobei das trainierte Modell (51) ein durch Training unter Verwendung eines Netzwerks in Übereinstimmung mit Reservoir-Computing erzeugtes Modell ist.

5. Schätzvorrichtung nach einem von Anspruch 1 bis 3, wobei das trainierte Modell (51) ein Modell ist, das durch Training unter Verwendung eines Netzwerks in Übereinstimmung mit physikalischem Reservoir-Computing erzeugt wird, das ein Reservoir verwendet, das die mindestens drei physikalischen Werte eines Bauteils (2) sammelt, das sich nichtlinear verformt.

6. Schätzverfahren, bei dem das Lernmodell eines Computers so konfiguriert ist, dass er als eine Schätzvorrichtung nach Anspruch 1 fungiert:
misst, mittels entsprechender Sensoren, die zwei physikalischen Werte (3,4) des Schätzobjekts;
gibt die zwei physikalischen Werte (3, 4) des Schätzobjekts ein, die von entsprechenden Sensoren gemessen werden, und
schätzt den physikalischen Zielwert (6), der dem Schätzobjekt entspricht.

7. Programm, um einen Computer zu veranlassen, als eine Schätzvorrichtung nach Anspruch 1 zu fungieren, durch:
Messen, mittels entsprechender Sensoren, der zwei physikalischen Werte (3, 4) des Schätzobjekts;
Eingeben der zwei physikalischen Werte (3, 4) des Schätzobjekts, die von entsprechenden Sensoren gemessen werden, und
Schätzen des physikalischen Zielwerts (6), der dem Schätzobjekt entspricht.

8. Trainierte Modellerzeugungsvorrichtung zum Erzeugen eines trainierten Modells, das in der Schätzvorrichtung nach Anspruch 1 verwendet wird, umfassend:
einen Erfassungsbereich, der so konfiguriert ist, dass er mindestens drei physikalische Werte von entsprechenden Sensoren erfasst; und
einen trainierten Modellerzeugungsbereich (52), der so konfiguriert ist, dass er auf der Basis einer Erfassung durch den Erfassungsbereich ein trainiertes Modell (51) einer Schätzvorrichtung nach Anspruch 1 erzeugt, wobei das trainierte Modell Eingaben aufweist, die die mindestens zwei physikalische Werte umfassen, wobei das trainierte Modell (51) so trainiert ist, dass es den dritten physikalischen Wert ausgibt, der ein physikalischer Zielwert (6) ist, der dem ersten physikalischen Wert (3) und dem zweiten physikalischen Wert (4) entspricht und ein Ausmaß nichtlinearer Verformung eines Bauteils ausdrückt.

## Revendications

1. Dispositif d'estimation, comprenant :
une section d'estimation (5) qui comprend un modèle entraîné (51) qui est entraîné en utilisant, comme données d'entraînement, une pluralité de valeurs physiques comprenant au moins trois valeurs physiques qui sont mesurées par des capteurs correspondants, qui sont de différents types, qui varient en fonction de la déformation d'un élément (2) se déformant de manière non linéaire et qui incluent une valeur physique cible (6) qui exprime la quantité de déformation de l'élément et à laquelle des informations chronologiques sont associées dans les données d'entraînement,
le modèle entraîné (51) présentant des entrées comprenant
au moins deux valeurs physiques (3, 4) autres que la valeur physique cible (6) et étant configurées pour délivrer en sortie la valeur physique cible (6) ;
dans lequel :
le dispositif est configuré pour acquérir à partir de capteurs correspondants et pour entrer les au moins deux valeurs physiques (3,4) mesurées par lesdits capteurs correspondants, d'un objet d'estimation qui est différent de l'élément (2) et qui se déforme de manière non linéaire, et pour estimer la valeur physique cible (6) de l'objet d'estimation,
une caractéristique électrique de l'élément (2) varie en fonction de la déformation, et les au moins deux valeurs physiques incluent une première valeur physique (3) qui est une grandeur d'une pression qui déforme l'élément (2), une deuxième valeur physique (4) exprimant la caractéristique électrique qui varie en fonction de la déformation de l'élément (2), et la quantité physique cible (6) exprime une quantité de déformation non linéaire de l'élément (2), et
le modèle entraîné (51) étant configuré pour utiliser la première valeur physique (3) et la deuxième valeur physique (4) comme entrées qui sont mesurées par des capteurs correspondants, et pour délivrer en sortie la valeur physique cible (6) qui correspond à la première valeur physique (3) et à la deuxième valeur physique (4).

2. Dispositif d'estimation selon la revendication 1, dans lequel :
l'élément (2) inclut un corps élastique (21) présentant un intérieur qui est formé pour être creux, un fluide sous pression étant fourni à l'intérieur creux, et le corps élastique (21) générant une force de contraction dans une direction prédéterminée,
la première valeur physique (3) est une valeur de pression exprimant un état fourni du fluide sous pression qui est fourni au corps élastique (21), et
la deuxième valeur physique (4) est une valeur de résistance électrique du corps élastique (21), et la valeur physique cible (6) est une distance du corps élastique (21) dans la direction prédéterminée.

3. Dispositif d'estimation selon la revendication 1 ou la revendication 2, dans lequel le modèle entraîné (51) est un modèle généré par entraînement à l'aide d'un réseau neuronal récurrent.

4. Dispositif d'estimation selon l'une quelconque des revendications 1, 2 ou 3, dans lequel le modèle entraîné (51) est un modèle généré par entraînement à l'aide d'un réseau conformément à un calcul de réservoir.

5. Dispositif d'estimation selon l'une quelconque des revendications 1 à 3, dans lequel le modèle entraîné (51) est un modèle généré par entraînement à l'aide d'un réseau conformément à un calcul de réservoir physique qui utilise un réservoir qui accumule au moins trois valeurs physiques d'un élément (2) qui se déforme de manière non linéaire.

6. Procédé d'estimation, dans lequel le modèle d'apprentissage d'un ordinateur configuré pour fonctionner comme un dispositif d'estimation tel que revendiqué dans la revendication 1 :
mesure, par l'intermédiaire de capteurs correspondants, les deux valeurs physiques (3,4) de l'objet d'estimation ;
entre les deux valeurs physiques (3, 4) de l'objet d'estimation qui sont mesurées par des capteurs correspondants, et
estime la valeur physique cible (6) correspondant à l'objet d'estimation.

7. Programme permettant à un ordinateur de fonctionner comme un dispositif d'estimation selon la revendication 1 en :
mesurant, par l'intermédiaire de capteurs correspondants, les deux valeurs physiques (3,4) de l'objet d'estimation ;
entrant les deux valeurs physiques (3, 4) de l'objet d'estimation qui sont mesurées par des capteurs correspondants, et
estimant la valeur physique cible (6) correspondant à l'objet d'estimation.

8. Dispositif de génération de modèle entraîné pour générer un modèle entraîné utilisé dans le dispositif d'estimation selon la revendication 1, comprenant :
une section d'acquisition configurée pour acquérir les au moins trois valeurs physiques provenant de capteurs correspondants ; et
une section de génération de modèle entraîné (52) configurée, sur la base d'un résultat d'acquisition par la section d'acquisition, pour générer un modèle entraîné (51) d'un dispositif d'estimation tel que revendiqué dans la revendication 1, le modèle entraîné présentant des entrées comprenant les au moins deux valeurs physiques, le modèle entraîné (51) étant entraîné à délivrer en sortie la troisième valeur physique qui est une valeur physique cible (6) qui correspond à la première valeur physique (3) et à la deuxième valeur physique (4) et exprime une quantité de déformation non linéaire d'un élément.
